# EUROPEAN PATENT APPLICATION

(11) **EP 4 727 189 A1**
(43) Date of publication of application: **15.04.2026**
(21) Application number: 24819113.2
(22) Date of filing: 15.05.2024
(51) Int. Cl.: H04W 12/104, G06F 21/60, H04W 12/12, H04W 12/63

(54) **DETERMINATION DEVICE, DETERMINATION METHOD, AND PROGRAM**

(30) Priority: 07.06.2023 JP 2023093866
(71) Applicant: NTT DOCOMO BUSINESS, Inc., Tokyo 100-8019 (JP); NTT DOCOMO, INC., Tokyo 100-6150 (JP)
(72) Inventor: TAKEBA, Ryotaro, Tokyo 100-8019 (JP); YOSHIKAWA, Hiroaki, Tokyo 100-6150 (JP); ONODA, Takanobu, Tokyo 100-6150 (JP)
(74) Representative: Murgitroyd & Company
(86) International application number: PCT/JP2024/017987
(87) International publication number: WO 2024/252876

(57) **Abstract**

A check device configured to check authenticity of terminal location information indicating a location of a terminal device is provided, the check device including: an information acquiring unit configured to acquire the terminal location information from the terminal device; and a check unit configured to determine whether the acquired terminal location information is authentic information by comparing the acquired terminal location information with comparative location information indicating the location of an object that is subject to comparison with the terminal device.

## Description

### Background Art

The present disclosure relates to a technique for checking the authenticity of location information.

Global positioning system (GPS) technology is widely used to acquire location information of terminal devices such as smartphones. GPS technology is used, for example, to navigate the user of a terminal device to his/her destination, to identify the user's location while he/she is running, hiking, and so forth. For example, Patent Document 1 discloses a technique for guiding pedestrians using GPS technology.

### Citation List

### Patent Documents

Patent Document 1: Japanese Patent Application Publication No. 2000-28391

### Summary of Invention

### Technical Problem

In recent years, many services have come to use location information acquired by terminal devices. However, location information acquired by terminal devices might be falsified. If terminal location information is falsified and the falsification cannot be detected, various problems will arise.

For example, assuming a case where a business provides a service that requires the users to be in a specific geographic area, falsifying their terminal devices' location information might enable those who should not be able to use the service to use it.

The present disclosure has been made in view of the foregoing and aims to provide a technique for checking the authenticity of terminal location information.

The technique according to the present disclosure provides a check device configured to check the authenticity of terminal location information indicating the location of a terminal device. The check device includes: an information acquiring unit configured to acquire the terminal location information from the terminal device; and a check unit configured to determine whether the acquired terminal location information is authentic information by comparing the acquired terminal location information with comparative location information indicating the location of an object that is subject to comparison with the terminal device.

The present disclosure thus provides a technique for checking the authenticity of terminal location information.

### Brief Description of Drawings

[FIG. 1] FIG. 1 shows an example of overall architecture of a communication system according to the present disclosure;
[FIG. 2] FIG. 2 shows an example structure of a check device 100 according to the present disclosure;
[FIG. 3] FIG. 3 is a sequence diagram for explaining an example operation of the communication system;
[FIG. 4] FIG. 4 is a diagram for explaining an example of checking the authenticity of terminal location information according to the present disclosure;
[FIG. 5] FIG. 5 is a diagram for explaining another example of checking the authenticity of terminal location information;
[FIG. 6] FIG. 6 is a diagram for explaining another example of checking the authenticity of terminal location information; and
[FIG. 7] FIG. 7 shows an example hardware structure of a device according to the present disclosure.

### Description of Embodiment

An embodiment of the present disclosure (hereinafter "present embodiment") will be described below in detail with reference to the accompanying drawings. The embodiment described below is only an example, and the applicability of the present disclosure is by no means limited to the following embodiment.

### (Existing Problems)

First, problems with the technology on which the present embodiment is based will be described. As mentioned earlier, although GPS technology is widely used to acquire location information, such location information might be falsified. The following are examples of cases in which falsified location information causes problems.

### <First Example>

An application installed on a terminal device may provide a game in which the user can find various monsters, receive rewards, and so forth, by walking. This application acquires the user's location information using GPS technology. In this case, falsifying the user's location information may enable the user to earn various points without actually walking.

### <Second Example>

Unauthorized use of credit cards is on the rise. If a credit card user carries a terminal device with him/her and its location information can be used as the credit card user's location information, it would be possible to improve the reliability of user authentication and reduce unauthorized use of credit cards. However, again, falsification of terminal location information might enable fraudulent use of credit cards.

### <Third Example>

In the event of disasters such as earthquakes, on one hand, collecting location information from terminal devices is important to assist rescue operations, for example. On the other hand, when disasters occur, there is a risk that false information may be spread via social media (e.g., social networking services (SNS)).

In all of the first to third examples, if whether location information acquired from the terminal devices is falsified can be detected, fraudulent conduct can be prevented or substantially prevented.

Below, a technique according to the present embodiment for determining the authenticity of location information acquired from terminal devices (whether the location information is falsified) will be described.

### (Overview of Embodiment)

First, an overview of the technique according to the present embodiment will be described. In this embodiment, a check device 100 (described later) compares a terminal device's location information acquired via GPS, with different location information (also referred to as "comparative location information"), to confirm whether the former location information acquired via GPS is altered or falsified. This makes it possible to find location information that is unlikely to be falsified.

For example, where a terminal device's location information is acquired via GPS, location information from a base station (an example of what is subject to comparison with a terminal device) engaged in ongoing communication with the terminal device may serve as an example of comparative location information.

A base station does not move, so its location information is fixed. The check device 100 compares, for example, location information acquired from a terminal device, with location information acquired from a base station to which the terminal device is connected, thereby determining whether the terminal location information from the terminal device indicates a location where radio signals from the terminal device can reach the base station. If the location information of the terminal device indicates a location where radio waves from the terminal device should be unable to reach the base station, the check device 100 can determine that the terminal device's location information is falsified.

The technique according to the present embodiment will be described in greater detail below. The technique according to this disclosure is applicable to any of the first to third examples mentioned above and also applicable to cases other than the first to third examples. Examples will be described below in which the technique according to this disclosure is used to prevent unauthorized use of credit cards.

For example, cases will be described below in which whether a user is trying to use a credit card in a legitimate way is determined such that, when the user, carrying a terminal device with him/her, is trying to use the credit card at a specific location (e.g., a location where the user regularly uses the credit card, a location that is registered in advance, etc.), it is determined that the user is likely using the credit card legitimately.

### (Example of System Architecture)

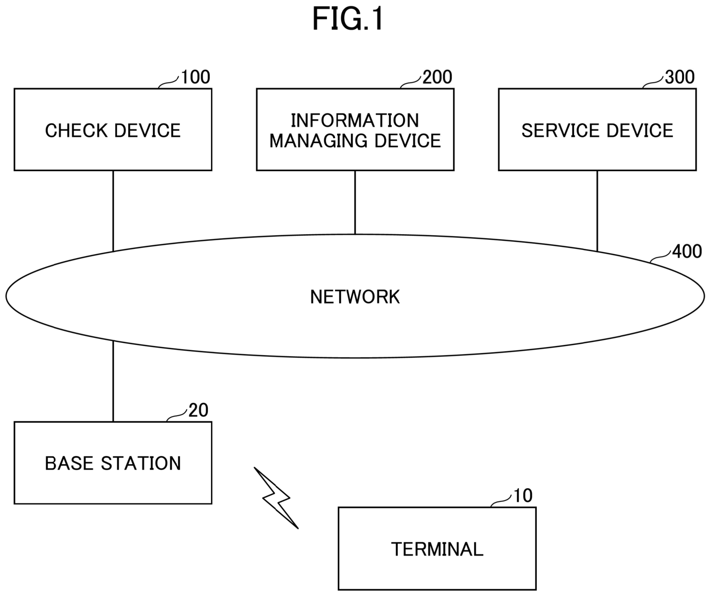

FIG. 1 shows an example of overall architecture of a communication system according to the present embodiment. As shown in FIG. 1, this communication system includes at least a check device 100, an information managing device 200, and a service device 300, which are connected to a network 400. A fixed base station 20 is provided in each area, and wireless communication takes place between a terminal device 10 and the base station 20. FIG. 1 shows one base station 20 and one terminal device 10 for ease of explanation.

The network 400 includes a mobile provider's core network (also referred to as a "carrier network"). The base station 20 is connected to the core network. The base station 20 and the terminal device 10 communicate with each other by using wireless access technologies such as 3G, 4G, 5G, or 6G.

The check device 100 checks the authenticity of location information of the terminal device 10 using the present disclosure's technique. The information managing device 200 holds location information of the base station 20. According to the present embodiment, the service device 300 executes processes for preventing unauthorized use of credit cards.

The terminal device 10 is, for example, a portable terminal device (mobile terminal device) such as a smartphone. The terminal device 10 may also be a vehicle such as a car. The terminal device 10 at least has a wireless communication function and a function (e.g., GPS function) to acquire its own location information. In the following description of the present embodiment, the terminal device 10 belongs to a credit card user.

### (Example Structure of Check Device 100)

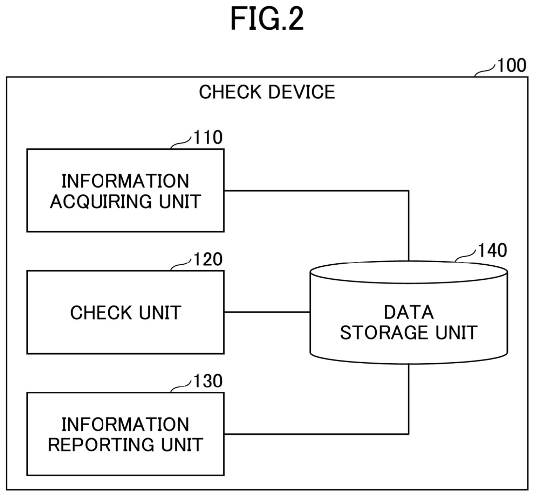

FIG. 2 shows an example structure of the check device 100. As shown in FIG. 2, the check device 100 includes at least an information acquiring unit 110, a check unit 120, an information reporting unit 130, and a data storage unit 140. The operation of each unit in the communication system will be described below.

### (Example of Communication System Operation)

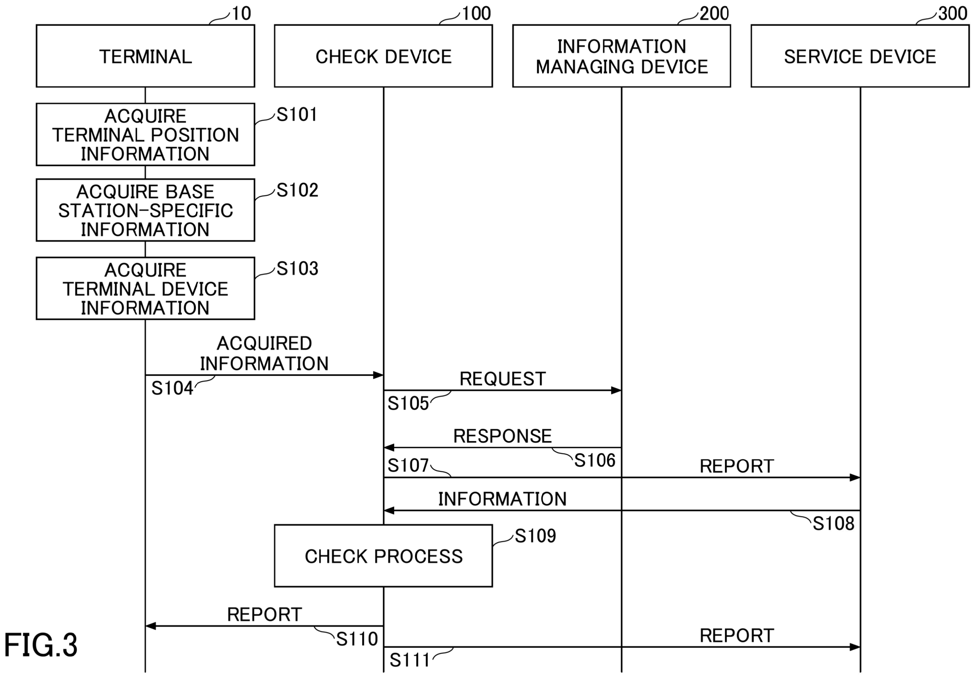

Next, an example of how the communication system operates following the steps in the sequence diagram of FIG. 3 will be described. The example illustrated in FIG. 3 assumes that the terminal device 10 is located in the service area of the base station 20.

### <Step S101>

In step S101, the terminal device 10 acquires its own location information using its GPS function. The terminal device 10 acquires its location information consistently (for example, on a regular basis). The location information that the terminal device 10 acquires with respect to itself will be referred to as "terminal location information."

### <Step S102>

In step S102, the terminal device 10 acquires base station-specific information from the base station 20. The terminal device 10 acquires base station-specific information consistently (e.g., on a regular basis). A base station's base station-specific information may be, for example, its tracking area code (TAC) and cell ID. One or both of a TAC and a cell ID may serve as a base station's base station-specific information. Information that is neither a TAC nor a cell ID may serve as a base station's base station-specific information. This embodiment thus provides base station-specific information, so that location information of the base station 20 can be acquired.

### <Step S103>

In step S103, the terminal device 10 acquires its own terminal device information from, for example, a memory/storage device built therein. The terminal device information that the terminal device 10 acquires may be, for example, one or both of: an international mobile equipment identifier (IMEI); and a mobile country code (MCC) and a mobile network code (MNC). The terminal device information may also be information other than these. For example, a user ID or a password for the user of the terminal device 10 may serve as terminal device information.

### <Step S104>

In step S104, the terminal device 10 sends the information acquired in step S101 to step S103 (terminal location information, base station-specific information, terminal device information, etc.) to the check device 100. The information acquiring unit 110 in the check device 100 receives (acquires) the information sent from the terminal device 10 (terminal location information, base station-specific information, terminal device information, etc.), and the acquired information is stored in the data storage unit 140.

### <Step S105>

In step S105, the information acquiring unit 110 of the check device 100 extracts the base station-specific information acquired in step S104 from the data storage unit 140 and sends it to the information managing device 200, thereby requesting location information of the base station 20 (or "base station location information"). The information managing device 200 receives the base station-specific information.

### <Step S106>

In step S106, the information managing device 200 generates (or acquires) base station location information (e.g., the latitude, longitude, etc.) based on the base station-specific information received in step S105, and returns, in response to the request in step S105, the generated base station location information to the check device 100. The information acquiring unit 110 of the check device 100 acquires the base station location information and stores it in the data storage unit 140.

### <Step S107>

In step S107, the information reporting unit 130 of the check device 100 sends a notice, to the service device 300, indicating that authentication using location information pertaining to the user of the terminal device 10 (the party subject to authentication) is in progress. This notice includes information that can identify the terminal device 10, such as terminal device information.

### <Step S108>

The service device 300 stores, in its memory/storage device, one or more, or all, of the following information for every credit card user: the user's address; coordinate information of pre-registered locations; a black list; and a white list. The black list refers to, for example, a list of locations (places) where unauthorized use of a credit card is suspected. The white list refers to, for example, a list of locations (places) where a credit card is likely to be used legitimately.

In step S108, the service device 300 acquires, from the memory/storage device, one or more, or all, of the following information stored in association with the user of the terminal device 10 (the party subject to authentication): the address of the user; coordinate information of pre-registered locations; the black list; and the white list. The acquired information (hereinafter also referred to as "designated location information") is sent to the check device 100.

The information acquiring unit 110 of the check device 100 acquires the designated location information and stores it in the data storage unit 140.

### <Step S109>

In step S109, the check unit 120 compares the terminal location information acquired in step S104 and the base station location information acquired in step S106, thus checking the authenticity of the terminal location information (i.e., whether the terminal location information is falsified). As for the method of this authenticity check, a specific example will be described later.

For now, assume that the check unit 120 determines that the terminal location information acquired in step S104 is not falsified.

The check unit 120 compares the terminal location information with the designated location information and determines whether the location of the terminal device 10 is one appropriate for using the credit card. For example, the check unit 120 confirms that the location indicated by the acquired terminal location information is not in the black list. Furthermore, the check unit 120 confirms that the location indicated by the acquired terminal location information is in the white list.

For example, if the check unit 120 determines that the location of the terminal device 10 is an appropriate location for using the credit card, the check unit 120 generates authentication information indicating this decision. Also, if the check unit 120 determines that the location of the terminal device 10 is not an appropriate location for using the credit card (for example, the location is in the blacklist), the check unit 120 generates authentication information indicating this decision (for example, information indicating that the credit card cannot be used).

In the event the check unit 120 determines that the terminal location information is falsified, the check unit 120 may generate authentication information indicating that the credit card cannot be used, without comparing the acquired terminal location information with the designated location information.

### <Step S110 and Step S111>

The information reporting unit 130 of the check device 100 reports the authentication information generated in step S109 to the terminal device 10 (S110) and to the service device 300 (S111).

### (Examples of Process of Checking Authenticity of Terminal Location Information)

Examples of the process of checking the authenticity of terminal location information that takes place in the check unit 120 will be described. In the following description, coordinate information (positions of points) such as the latitude and longitude of the terminal device 10 will be used as terminal location information.

### <First Example>

The information acquiring unit 110 acquires coordinate information (positions of points) such as the latitude and longitude of the base station 20, as location information of the base station 20 (or "base station location information"), from the information managing device 200.

The check unit 120 calculates the distance (Euclidean distance) between the location indicated by the base station location information and the location indicated by the terminal location information. If the distance calculated then is less than or equal to a threshold, the check unit 120 determines that the terminal location information is authentic information (not falsified). If the distance calculated then is greater than the threshold, the check unit 120 determines that the terminal location information is not authentic information (that is, falsified).

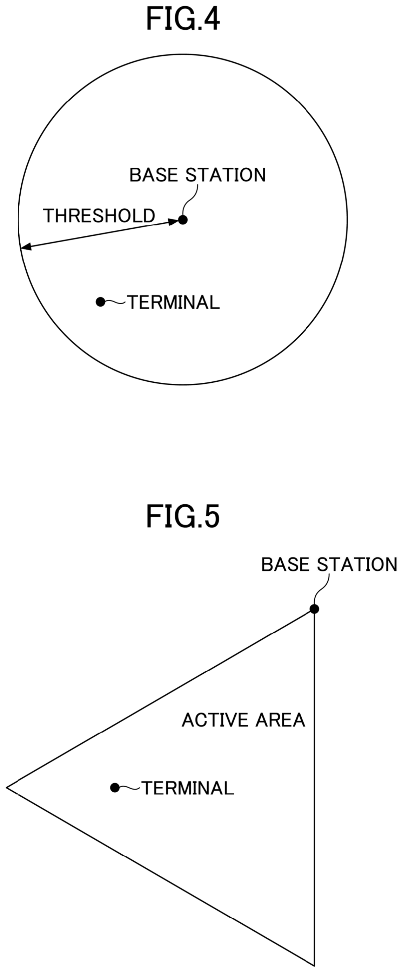

As for the threshold, a predetermined value may be shared in common by multiple base stations, or a predetermined value may be provided per base station. FIG. 4 illustrates a case in which no falsification is detected in the first example.

### <Second Example>

The information managing device 200 stores the latest information about each base station's active area, in addition to each base station's location information. The "active area" of a base station 10 is the area or range in which information sent from a terminal device 10 on radio waves reaches that base station 10.

The information acquiring unit 110 acquires information about the active area of the base station 20 from the information managing device 200 as location information of the base station 20 (or "base station location information").

The check unit 120 determines whether the location of the terminal device 10 indicated by the terminal location information is in the active area of the base station 20 indicated by the base station location information. If the terminal device 10 is located in the active area of the base station 20, the check unit 120 determines that the terminal location information is authentic information (not falsified). If the terminal device 10 is not located in the active area of the base station 20, the check unit 120 determines that the terminal location information is not authentic information (that is, falsified).

FIG. 5 illustrates a case in which no falsification is detected in the second example.

### <Third Example>

The terminal device 10 may deploy carrier aggregation and communicate using multiple carriers (i.e., multiple cells) simultaneously. In this case, the terminal device 10 sends multiple pieces of base station-specific information (cell IDs in this case) to the check device 100.

For example, assume that the check device 100 receives a cell ID_1 and a cell ID_2 from the terminal device 10. For now, assume that the location of the source carrier transmitting cell ID_1 and the location of the source carrier transmitting cell ID_2 are different.

The information acquiring unit 110 of the check device 100 sends cell ID_1 and cell ID_2 to the information managing device 200, thereby acquiring base station location information corresponding to cell ID_1 (hereinafter "first location") and base station location information corresponding to cell ID_2 (hereinafter "second location"). The base station location information here indicates the location of source antennas from which radio waves are sent. An "antenna" and a "base station" will therefore be used interchangeably.

The check unit 120 calculates the distance ("first distance") between the first location and the location indicated by the terminal location information, and calculates the distance ("second distance") between the second location and the location indicated by the terminal location information.

Assume here that a first threshold is provided to serve as the threshold for cell ID_1, and a second threshold is provided to serve as the threshold for cell ID_2. The first threshold and the second threshold may be the same or different.

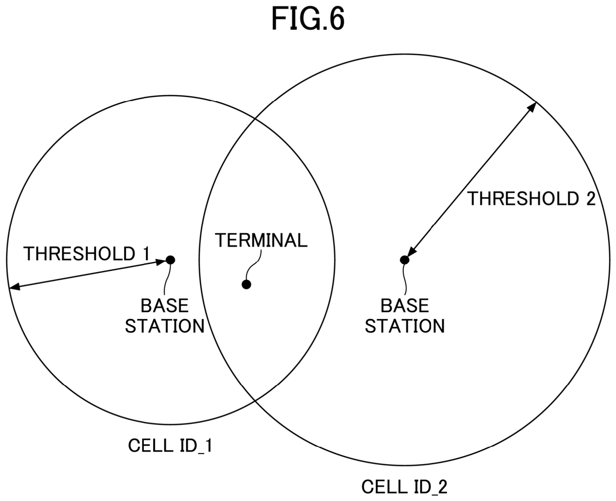

If "the first distance ≦ the first threshold" and "the second distance ≦ the second threshold" both hold, the check unit 120 determines that the terminal location information is authentic information (not falsified). If both "the first distance ≦ the first threshold" and "the second distance ≦ the second threshold" do not hold, the check unit 120 determines that the terminal location information is not authentic information (that is, falsified). FIG. 6 illustrates a case in which, no falsification is detected in the third example.

### (Detection of Falsification of Base Station-Specific Information)

Although there is a possibility of base station-specific information being falsified in the terminal device 10, the check device 100 can detect this falsification.

The terminal device 10 sends the base station-specific information acquired from the base station 20 to the check device 100 via the base station 20. For example, upon acquiring the base station-specific information sent from the terminal device 10, the check unit 120 of the check device 100 compares: information about the base station 20 being the source (in the network 400) that sent the base station-specific information; and the base station-specific information acquired. If these pieces of information do not match (for example, the TACs or the cell IDs do not match), the check unit 120 can determine that the base station-specific information is falsified.

It is also possible to check whether the base station-specific information is falsified based on the information transmission route in the network 400 (to be more specific, the mobile provider's carrier network).

In this case, when the information acquiring unit 110 of the check device 100 acquires information from the terminal device 10, the information acquiring unit 110 also acquires information about the acquired information's transmission route. Information's transmission route may refer to the route on which the information is sent, or the route on which control signals for allowing the information transmission are sent.

For example, when the information acquiring unit 110 of the check device 100 acquires information from the terminal device 10, the information acquiring unit 110 acquires information indicating that the acquired information or control plane signals passed through a node A and a node B on the information's transmission route.

For example, if the check unit 120 of the check device 100 acquires information from the terminal 10 and determines that the acquired information or control signals should not have passed through the node A (which is, for example, an access and mobility management function (AMF) in a distant area from the area associated with the base station-specific information), the check unit 120 can determine that the base station-specific information acquired then is falsified information. Note that, for example, by using blockchain technology in the base station 20 or the like, base station-specific information may be provided in an inalterable format.

### (Comparison with Terminal Location Information)

Although examples have been described above in which terminal location information is compared with base station location information, terminal location information need not always be compared with base station location information. That is, terminal location information may be compared with any fixed object (or anything that does not move). An example will be described below in which terminal location information is compared with an object or information other than base station location information.

Besides base station location information, for example, location information of a landline telephone with a 0ABJ number may be compared with terminal location information. This landline telephone may be a landline telephone installed at home or at work, or it may be a public phone.

The following example assumes that there is a landline telephone near the terminal device 10. For example, to illustrate a use case of preventing unauthorized use of a credit card, assume a situation in which the credit card is supposed to be used at a pre-registered location (for example, the user's home), and that a landline telephone is installed at that pre-registered location.

In this example, the check unit 120 of the check device 100 can acquire the 0ABJ number associated with terminal device information. The 0ABJ number may be acquired from the data storage unit 140 of the check device 100 or from the service device 300. The check unit 120 can also acquire location information of a landline telephone, to which a 0ABJ number is assigned (this location information may be also referred to as "telephone location information"). The telephone location information may be acquired from the data storage unit 140 of the check device 100 or from the service device 300.

First, terminal location information and terminal device information are sent from the terminal device 10. The information acquiring unit 110 of the check device 100 acquires the terminal location information and terminal device information sent from the terminal device 10.

Subsequently, upon acquiring the 0ABJ number (landline telephone number) associated with the terminal device information, the check unit 120 connects to the landline telephone (in other words, calls the landline telephone) using that 0ABJ number.

When the user of the terminal device 10 picks up the receiver of the telephone (in other words, answers the call), the check unit 120 sends authentication information (authentication code, for example) to the landline telephone. The user checks the authentication information and enters it to the landline telephone (the user may read the authentication information aloud, enter it by pushing buttons, etc.).

The check unit 120 receives the authentication information from the landline telephone and checks whether it matches the authentication information the check unit 120 sent to the landline telephone. Assuming that they match here, the check unit 120 determines that the user of the terminal device 10 is located at the location where the landline telephone is installed.

Next, the check unit 120 acquires the landline telephone's location information (or "telephone location information") and calculates the distance (Euclidean distance) between the location indicated by the telephone location information and the location indicated by the terminal location information. If the distance calculated then is less than or equal to a threshold, the check unit 120 determines that the terminal location information is authentic information (not falsified). If the distance calculated is greater than the threshold, the check unit 120 determines that the terminal location information is not authentic information (that is, falsified).

### (Example Hardware Structure of Devices)

Any of the devices (the terminal device 10, the base station 20, the check device 100, the information managing device 200, the service device 300, etc.) described in this embodiment can be implemented, for example, by having a computer execute a program.

These devices can be implemented by using hardware resources such as a central processing unit (CPU) and a memory built in a computer to execute a program corresponding to the processes performed by the devices. The program may be recorded on a computer-readable recording medium (portable memory, etc.) and stored, distributed, and so forth. The program can also be provided via a network such as the Internet, via email, and so forth.

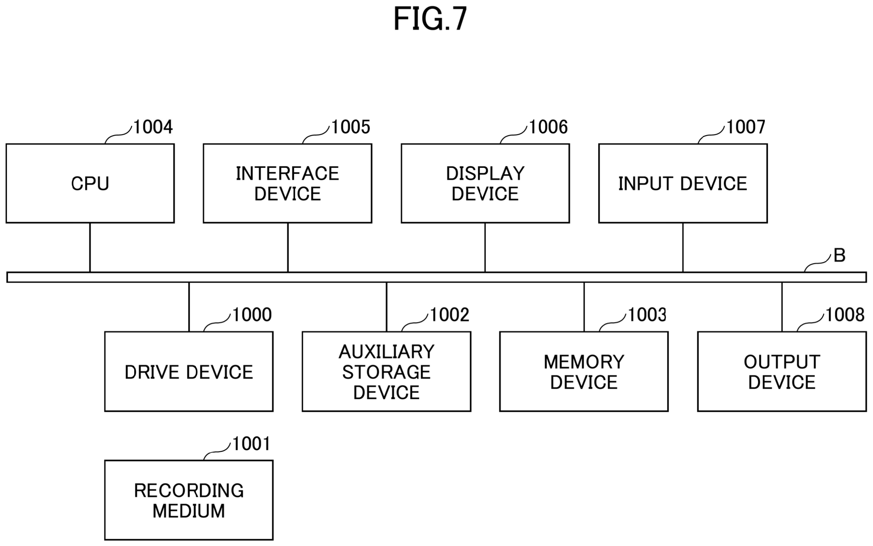

FIG. 7 is a diagram showing an example hardware structure of the computer. The computer in FIG. 7 includes at least a drive device 1000, an auxiliary storage device 1002, a memory device 1003, a CPU 1004, an interface device 1005, a display device 1006, an input device 1007, and an output device 1008, all of which are interconnected via a bus B.

A program that allows execution of processes on the computer is provided on a recording medium 1001 such as a compact disc read-only memory (CD-ROM), a memory card, etc. When the recording medium 1001 storing the program is set in the drive device 1000, the program is installed from the recording medium 1001 to the auxiliary storage device 1002 via the drive device 1000. However, the program does not necessarily have to be installed from the recording medium 1001; it can also be downloaded from another computer via a network. The auxiliary storage device 1002 stores the installed program, with necessary files, data, and so forth.

When instructed to start the program, the memory device 1003 reads the program from the auxiliary storage device 1002 and stores it. The CPU 1004 implements the functions associated with various devices in accordance with the program stored in the memory device 1003. The interface device 1005 serves as an interface for connecting to a network, etc. The display device 1006 displays a programmatic graphical user interface (GUI), etc. The input device 1007 may include a keyboard, a mouse, buttons, or a touch panel, and is used to input various operational commands. The output device 1008 outputs calculation results.

### (Effects of Embodiment)

As described above, the technique of the present embodiment makes it possible to check the authenticity of terminal location information.

Referring back to the game mentioned in the first example, checking the authenticity of terminal location information described above makes it possible to prevent or substantially prevent users from earning undeserved points. Referring back to the problem raised in the second example, unauthorized use of credit cards can be prevented or substantially prevented. Furthermore, as for the problem mentioned in the third example, the technique of the present disclosure makes it possible to acquire accurate location information even in the event of disasters, thereby, for example, facilitating rescue operations.

### <Additional Clauses>

The present disclosure furthermore includes the following additional clauses.

### (Additional Clause 1)

A check device configured to check the authenticity of terminal location information indicating the location of a terminal device, the check device including:
an information acquiring unit configured to acquire the terminal location information from the terminal device; and
a check unit configured to determine whether the acquired terminal location information is authentic information by comparing the acquired terminal location information with comparative location information indicating the location of an object that is subject to comparison with the terminal device.

### (Additional Clause 2)

The check device according to additional clause 1, in which:
the object that is subject to comparison with the terminal device may be a base station to which the terminal device is connected; and
the comparative location information may indicate the location of the base station or the active area of the base station.

### (Additional Clause 3)

The check device according to additional clause 2, in which the check device is further configured to determine that the acquired terminal location information is authentic information when the distance between the location indicated by the terminal location information and the location indicated by the comparative location information is less than a threshold.

### (Additional Clause 4)

The check device according to additional clause 2, in which the check device is further configured to determine that the acquired terminal location information is authentic information when the location indicated by the acquired terminal location information is in the active area of the base station.

### (Additional Clause 5)

The check device according to additional clause 1, in which:
the object that is subject to comparison with the terminal device may be a landline telephone; and
the comparative location information may indicates the location of the landline telephone.

### (Additional Clause 6)

A check method to be executed by a check device configured to check the authenticity of terminal location information indicating the location of a terminal device, the method including:
an information acquiring step of acquiring the terminal location information from the terminal device; and
a check step of determining whether the acquired terminal location information is authentic information by comparing the acquired terminal location information with comparative location information indicating the location of an object that is subject to comparison with the terminal device.

### (Additional Clause 7)

A non-transitory recording medium storing a program for causing a computer to function as the check device of one of additional clauses 1 to 5.

Although the present disclosure has been described above with reference to an embodiment, the present disclosure is by no means limited to the particulars of this embodiment and various alterations and changes can be made within the scope of the present disclosure as set forth in the accompanying claims.

This application claims priority to Japanese Patent Application No. 2023-093866, filed on June 7, 2023, the entire contents of which are hereby incorporated by reference in this application.

### Reference Signs List

- 10: Terminal
- 20: Base station
- 100: Check device
- 110: Information acquiring unit
- 120: Check unit
- 130: Information reporting unit
- 140: Data storage unit
- 200: Information managing device
- 300: Service device
- 400: Network
- 1000: Drive device
- 1001: Recording medium
- 1002: Auxiliary storage device
- 1003: Memory device
- 1004: CPU
- 1005: Interface device
- 1006: Display device
- 1007: Input device
- 1008: Output device

## Claims

1. A check device configured to check authenticity of terminal location information indicating a location of a terminal device, the check device comprising:
an information acquiring unit configured to acquire the terminal location information from the terminal device; and
a check unit configured to determine whether the acquired terminal location information is authentic information by comparing the acquired terminal location information with comparative location information indicating the location of an object that is subject to comparison with the terminal device.

2. The check device according to claim 1,
wherein the object that is subject to comparison with the terminal device may be a base station to which the terminal device is connected, and
wherein the comparative location information may indicate the location of the base station or the active area of the base station.

3. The check device according to claim 2, wherein the check device is further configured to determine that the acquired terminal location information is authentic information when the distance between the location indicated by the terminal location information and the location indicated by the comparative location information is less than a threshold.

4. The check device according to claim 2, wherein the check device is further configured to determine that the acquired terminal location information is authentic information when the location indicated by the acquired terminal location information is in the active area of the base station.

5. The check device according to claim 1,
wherein the object that is subject to comparison with the terminal device may be a landline telephone, and
wherein the comparative location information may indicates the location of the landline telephone.

6. A method allowing a check device to check authenticity of terminal location information indicating a location of a terminal device, the method comprising:
an information acquiring step of acquiring the terminal location information from the terminal device; and
a check step of determining whether the acquired terminal location information is authentic information by comparing the acquired terminal location information with comparative location information indicating the location of an object that is subject to comparison with the terminal device.

7. A non-transitory recording medium storing a program for causing a computer to function as the check device of one of claims 1 to 5.
